(19) Europäisches Patentamt / European Patent Office / Office européen des brevets

(11) **EP 4 554 138 A1**

(12) **EUROPEAN PATENT APPLICATION**

(43) Date of publication:
14.05.2025 Bulletin 2025/20

(21) Application number: 23306943.4

(22) Date of filing: **09.11.2023**

(51) International Patent Classification (IPC):
*H04L 9/00* (2022.01)        *H04L 9/30* (2006.01)
*H04L 9/32* (2006.01)

(52) Cooperative Patent Classification (CPC):
**H04L 9/004; H04L 9/3093; H04L 9/3247**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **THALES DIS FRANCE SAS**
**92190 Meudon (FR)**

(72) Inventors:
• **BERZATI, Alexandre**
  **13710 FUVEAU (FR)**
• **CALLE VIERA, Andersson**
  **13100 AIX EN PROVENCE (FR)**
• **VIGILANT, David**
  **92240 MALAKOFF (FR)**

(74) Representative: **Bricks, Amélie**
**Thales Dis France SAS**
**Intellectual Property Department**
**6, rue de la Verrerie**
**92190 Meudon (FR)**

(54) **METHOD FOR SECURING AGAINST FAULT ATTACKS AN EXECUTION OF A VERIFICATION OF A CRYSTALS-DILITHIUM POST-QUANTUM SIGNATURE**

(57) The present invention relates to a method for securing against fault attacks the execution of the verification of a Crystals-Dilithium post-quantum digital signature $\sigma$ of a message M comprising a challenge seed $\tilde{c}$, a test vector $\mathbf{z}$ and a hint vector of polynomials $\mathbf{h}$ generated with a secret key $sk = (\rho, K, tr, \mathbf{s_1}, \mathbf{s_2}, \mathbf{t_0})$, said digital signature verification taking as inputs, said digital signature $\sigma$, said message M and a public key $pk = (\rho, \mathbf{t_1})$ and comprising a step of ensuring that a fault attack aiming at verifying one of the conditions *P1, P2* and *P3* does not lead to accept a forged signature, where :

$$P1 : c\mathbf{t_1}.2^d = 0,$$

$$P2 : \|c\mathbf{t_1}.2^d\|_\infty < \beta \text{ and } \|LowBits_q(\mathbf{Az} - c\mathbf{t_1}.2^d, 2\gamma_2\|_\infty < \gamma_2 - \beta,$$

$$P3 : \|c\mathbf{t_1}.2^d\|_\infty < \gamma_2.$$

[Fig. 1]

<u>Gen</u>

$\zeta \leftarrow \{0,1\}^{256}$

$(\rho, \rho', K) \in \{0,1\}^{256} \times \{0,1\}^{512} \times \{0,1\}^{256} := H(\zeta)$ ▷ H is instantiated as SHAKE-256

$\mathbf{A} \in R_q^{k \times \ell} := \mathsf{ExpandA}(\rho)$ ▷ $\mathbf{A}$ is generated and stored in NTT Representation as $\hat{\mathbf{A}}$

$(\mathbf{s}_1, \mathbf{s}_2) \in S_\eta^\ell \times S_\eta^k := \mathsf{ExpandS}(\rho')$

$\mathbf{t} := \mathbf{A}\mathbf{s}_1 + \mathbf{s}_2$ ▷ Compute $\mathbf{A}\mathbf{s}_1$ as $\mathtt{NTT}^{-1}(\hat{\mathbf{A}} \cdot \mathtt{NTT}(\mathbf{s}_1))$

$(\mathbf{t}_1, \mathbf{t}_0) := \mathsf{Power2Round}_q(\mathbf{t}, d)$

$tr \in \{0,1\}^{256} := H(\rho \parallel \mathbf{t}_1)$

**return** $(pk = (\rho, \mathbf{t}_1), sk = (\rho, K, tr, \mathbf{s}_1, \mathbf{s}_2, \mathbf{t}_0))$

<u>Sign$(sk, M)$</u>

$\mathbf{A} \in R_q^{k \times \ell} := \mathsf{ExpandA}(\rho)$ ▷ $\mathbf{A}$ is generated and stored in NTT Representation as $\hat{\mathbf{A}}$

$\mu \in \{0,1\}^{512} := H(tr \parallel M)$

$\kappa := 0, (\mathbf{z}, \mathbf{h}) := \bot$

$\rho' \in \{0,1\}^{512} := H(K \parallel \mu)$ (or $\rho' \leftarrow \{0,1\}^{512}$ for randomized signing)

**while** $(\mathbf{z}, \mathbf{h}) = \bot$ **do** ▷ Pre-compute $\hat{\mathbf{s}}_1 := \mathtt{NTT}(\mathbf{s}_1)$, $\hat{\mathbf{s}}_2 := \mathtt{NTT}(\mathbf{s}_2)$, and $\hat{\mathbf{t}}_0 := \mathtt{NTT}(\mathbf{t}_0)$

   $\mathbf{y} \in \tilde{S}_{\gamma_1}^\ell := \mathsf{ExpandMask}(\rho', \kappa)$

   $\mathbf{w} := \mathbf{A}\mathbf{y}$ ▷ $\mathbf{w} := \mathtt{NTT}^{-1}(\hat{\mathbf{A}} \cdot \mathtt{NTT}(\mathbf{y}))$

   $\mathbf{w}_1 := \mathsf{HighBits}_q(\mathbf{w}, 2\gamma_2)$

   $\tilde{c} \in \{0,1\}^{256} := H(\mu \parallel \mathbf{w}_1)$

   $c \in B_\tau := \mathsf{SampleInBall}(\tilde{c})$ ▷ Store $c$ in NTT representation as $\hat{c} = \mathtt{NTT}(c)$

   $\mathbf{z} := \mathbf{y} + c\mathbf{s}_1$ ▷ Compute $c\mathbf{s}_1$ as $\mathtt{NTT}^{-1}(\hat{c} \cdot \hat{\mathbf{s}}_1)$

   $\mathbf{r}_0 := \mathsf{LowBits}_q(\mathbf{w} - c\mathbf{s}_2, 2\gamma_2)$ ▷ Compute $c\mathbf{s}_2$ as $\mathtt{NTT}^{-1}(\hat{c} \cdot \hat{\mathbf{s}}_2)$

   **if** $\|\mathbf{z}\|_\infty \geq \gamma_1 - \beta$ **or** $\|\mathbf{r}_0\|_\infty \geq \gamma_2 - \beta$, **then** $(\mathbf{z}, \mathbf{h}) := \bot$

   **else**

      $\mathbf{h} := \mathsf{MakeHint}_q(-c\mathbf{t}_0, \mathbf{w} - c\mathbf{s}_2 + c\mathbf{t}_0, 2\gamma_2)$ ▷ Compute $c\mathbf{t}_0$ as $\mathtt{NTT}^{-1}(\hat{c} \cdot \hat{\mathbf{t}}_0)$

      **if** $\|c\mathbf{t}_0\|_\infty \geq \gamma_2$ **or** the # of 1's in $\mathbf{h}$ is greater than $\omega$, **then** $(\mathbf{z}, \mathbf{h}) := \bot$

   $\kappa := \kappa + \ell$

**return** $\sigma = (\tilde{c}, \mathbf{z}, \mathbf{h})$

<u>Verify$(pk, M, \sigma = (\tilde{c}, \mathbf{z}, \mathbf{h}))$</u>

$\mathbf{A} \in R_q^{k \times \ell} := \mathsf{ExpandA}(\rho)$ ▷ $\mathbf{A}$ is generated and stored in NTT Representation as $\hat{\mathbf{A}}$

$\mu \in \{0,1\}^{512} := H(H(\rho \parallel \mathbf{t}_1) \parallel M)$

$c := \mathsf{SampleInBall}(\tilde{c})$

$\mathbf{w}_1' := \mathsf{UseHint}_q(\mathbf{h}, \mathbf{A}\mathbf{z} - c\mathbf{t}_1 \cdot 2^d, 2\gamma_2)$ ▷ Compute as $\mathtt{NTT}^{-1}(\hat{\mathbf{A}} \cdot \mathtt{NTT}(\mathbf{z}) - \mathtt{NTT}(c) \cdot \mathtt{NTT}(\mathbf{t}_1 \cdot 2^d))$

**return** $[\![\|\mathbf{z}\|_\infty < \gamma_1 - \beta]\!]$ **and** $[\![\tilde{c} = H(\mu \parallel \mathbf{w}_1')]\!]$ **and** $[\![\text{# of 1's in } \mathbf{h} \text{ is } \leq \omega]\!]$

**Description**

**FIELD OF THE INVENTION**

The present invention relates to the field of cryptographic schemes, and of associated cryptographic devices, and more particularly to improvements to Dilithium lattice-based calculation scheme.

**BACKGROUND OF THE INVENTION**

The increasing computational power of quantum computers is a growing threat to the security of classical cryptographic schemes such as RSA or ECDSA. Such schemes will eventually be completely defenseless against attacks performed using quantum computers. Therefore, work is being done to develop new efficient schemes that would be resistant against such attacks.

Lattice based schemes have been proved resistant to quantum computer attacks. Among this class of schemes, Dillithium and Kyber have been selected by the NIST to become Post-Quantum Cryptography standards for supporting respectively signature and encryption.

As for any other public key cryptographic scheme, Dillithium scheme comprises a verification algorithm enabling to verify, using a public key, that a signature of a message has been signed by the owner of the corresponding secret key. Nevertheless, this verification algorithm may be sensitive to fault attacks.

Therefore, there is a need for improvements of Dillithium algorithm enabling to detect fault attacks during the execution of the signature verification process, or enabling to make the signature verification algorithm reject a forged signature even when a fault attack is performed by an attacker during the execution of the signature verification process.

**SUMMARY OF THE INVENTION**

For this purpose and according to a first aspect, this invention therefore relates to a method for securing against fault attacks the execution of the verification of a Crystals-Dilithium post-quantum digital signature $\sigma$ of a message M comprising a challenge seed $\bar{c}$, a test vector $\mathbf{z}$ and a hint vector of polynomials $\mathbf{h}$, $\sigma = (\bar{c}, \mathbf{z}, \mathbf{h})$, generated with a secret key sk = $(\rho, K, tr, \mathbf{s_1}, \mathbf{s_2}, \mathbf{t_0})$
where :

- the key values $\rho$, K are 256 bits binary values,
- $\mathbf{s_1}$ and $\mathbf{s_2}$ are secret vectors of length l, respectively k, of elements in $Z_q[X]/(X^n+1)$ whose coefficients are lower than a first predetermined value $\eta$, with k, l, q and n integers,
- $\mathbf{t_0}$ is a polynomial vector of length k equal to the centered reduction modulo $2^d$ of a polynomial vector t modulo q with d an integer and $\mathbf{t} = \mathbf{As_1} + \mathbf{s_2}$, $\mathbf{A}$ being a matrix of size k*l whose elements are all polynomials in $Z_q[X]/(X^n+1)$ generated from said key value $\rho$ using an extendable output function ExpandA,
- and $tr$ is a hash of the key value $\rho$ and of $\mathbf{t_1}$ with $\mathbf{t_1} = ((\mathbf{t} - \mathbf{t_0})/2^d)$,

said Crystals-Dilithium post-quantum digital signature verification taking as inputs, said digital signature $\sigma$, said message M and a public key pk = $(\rho, \mathbf{t_1})$, and comprising :

- a) generating said matrix $\mathbf{A}$,
- b) generating a value $\mu$ from the public key values $\rho$ and $\mathbf{t_1}$ and from said message M using a hash function,
- c) generating from the challenge seed $\bar{c}$ of the digital signature $\sigma$ a challenge c using the SampleInBall function,
- d) generating a vector of polynomials $\mathbf{w_1}'$ using the UseHint$_q$ function which uses said hint vector $\mathbf{h}$ of the digital signature to recover, from the subtraction of the value $\mathbf{Az}$ by an intermediate value $c\mathbf{t_1}.2^d$, high-order bits of $\mathbf{Az}$-c$\mathbf{t}$: $\mathbf{w_1}' = \text{UseHint}_q(\mathbf{h}, \mathbf{Az}-c\mathbf{t_1}. 2^d, 2\gamma_2)$, where $\gamma_2$ a determined parameter,
- e) testing whether the digital signature, $\bar{c}, \mathbf{z}, \mathbf{h}$ fulfills predetermined conditions comprising :

  - checking whether the absolute value of the centered reduction modulo q of each coefficient of each polynomial of the test vector $\mathbf{z}$ of the digital signature is lower than $\gamma_1 - \beta$, with $\gamma_1$ and $\beta$ determined parameters,
  - checking whether the challenge seed of the digital signature $\bar{c}$ is equal to the hash of the generated value $\mu$ concatenated to the vector of polynomials $\mathbf{w_1}'$,
  - checking whether the number of 1's in the vector of polynomials $\mathbf{h}$ of the digital signature is less than a predetermined integer $\omega$,

and when at least one of said conditions is not fulfilled, rejecting the digital signature, else accepting said signature,

said method being performed by a cryptographic device (100) comprising a processor (101) and a memory (103), wherein said verification of the signature comprises further : a step of ensuring that a fault attack aiming at verifying one of the conditions *P1, P2* and *P3* does not lead to accept a forged signature,

where :

$P1$ : $ct_1.2^d = 0$,
$P2$ : $\|ct_1.\ 2^d\|_\infty < \beta$ and $\|LowBits_q(\ \textbf{Az} - ct_1.\ 2^d, 2\gamma_2\ \| < \gamma_2 - \beta$,
$P3$ : $\|ct_1.\ 2^d\|_\infty\ 2^d\|_\infty < \gamma_2$.

Such a method enables to prevent an attacker from having a forged signature accepted by Crystals-Dilithium signature verification process thanks to a successful fault attack on the computation of the vector of polynomials $\textbf{w}_1$' making any one of the conditions *P1, P2* or *P3* verified.

As a **first example,** ensuring that a fault attack aiming at verifying one of conditions *P1, P2* and *P3* does not lead to accept a forged signature may comprise detecting said fault attack has occurred and rejecting said digital signature.

By doing so, a forged signature will be rejected despite a successful fault attack resulting in $UseHint_q(\textbf{h}, \textbf{Az}-ct_1.2^d, 2\gamma_2)$ being equal to $HighBits_q(\textbf{Az},2\gamma_2)$.

In a first exemplary embodiment, detecting said fault attack has occurred may comprise checking the distribution of the intermediate value $ct_1 2^d$ before generating the vector of polynomials $\textbf{w}_1$'.

Such a check enables to detect a fault attack resulting in the intermediate value $ct_1 2^d$ having only low values.

In a second exemplary embodiment, detecting said fault attack has occurred may comprise verifying the correctness of the value d before generating the vector of polynomials $\textbf{w}_1$'.

Such a check enables to detect a fault attack on the exponent d which would set it to a small value, or even 0, in order to get one of the conditions P1, P2, P3 verified.

In this second exemplary embodiment, verifying the correctness of the value d may comprise checking that $2^d \times (2^d)^{-1}$ equals to 1 mod q.

In a third exemplary embodiment, detecting said fault attack has occurred may comprise checking whether the infinite norm of the intermediate value $ct_1 2^d$ is higher than the determined parameter $\gamma_2$ before generating the vector of polynomials $\textbf{w}_1$'.

Such a check also enables to detect a fault attack resulting in the intermediate value $ct_1 2^d$ having only low values.

In a fourth exemplary embodiment, detecting said fault attack has occurred may comprise comparing the high bits of the vector $\textbf{Az}$ and $UseHint_q(\textbf{h}, \textbf{Az}-ct_1.\ 2^d, 2\gamma_2)$.

Such a check directly verifies if the goal aimed by the attacker has been reached, which is definitely a signature of a fault attack on the signature verification process.

In this fourth exemplary embodiment:

- generating a vector of polynomials $\textbf{w}_1$' using the $UseHint_q$ function may comprise :

  - generating a first temporary value temp1 equal to the vector $\textbf{Az,}$
  - generating a second temporary value temp2 using the $HighBits_q$ function which recovers high-order bits of said first temporary value: temp2 = $HighBits_q$(temp1, $2\gamma_2$),
  - generating said vector of polynomials $\textbf{w}_1$' using the $UseHint_q$ function which uses the hint vector of the digital signature h to recover, from a result of a subtraction of the first temporary value by the intermediate value $ct_1.2^d$, high-order bits of $\textbf{Az}$-ct: $\textbf{w}_1$' = $UseHint_q(\textbf{h}, temp1-ct_1.\ 2^d, 2\gamma_2)$,
  - comparing the high bits of the vector $\textbf{Az}$ and $UseHint_q(\textbf{h}, \textbf{Az}-ct_1.\ 2^d, 2\gamma_2)$ may comprise checking whether said generated vector of polynomials $\textbf{w}_1$' is equal to said generated second temporary value temp2.

As **a second example,** ensuring that a fault attack aiming at verifying one of conditions *P1, P2* and *P3* does not lead to accept a forged signature may comprise a step of ensuring that $UseHint_q(\textbf{h}, \textbf{Az}-ct_1.2^d, 2\gamma_2)$ is not equal to $HighBits_q(\textbf{Az},2\gamma_2)$ when said fault attack occurs.

By doing so, there is no need to detect a fault attack and to take appropriate measures. Even if a fault attack occurs, the method ensures that the goal of the attacker when performing this fault attack, which is having $UseHint_q(\textbf{h}, \textbf{Az}-ct_1.2^d, 2\gamma_2)$ equal to $HighBits_q(\textbf{Az},2\gamma_2)$, is not reached.

In a fifth exemplary embodiment, ensuring that $UseHint_q(\textbf{h}, \textbf{Az}-ct_1 2^d, 2\gamma_2)$ is not equal to $HighBits_q(\textbf{Az},2\gamma_2)$ when said fault attack occurs may comprise setting $d_1 > 3$ and $d_2 > 3$ such that $d = d_1 + d_2$ and computing the intermediate value $ct_1.2^d$ at the step of generating the vector of polynomials $\textbf{w}_1$' by computing $ct_1.\ 2\hat{}d_1$ and then multiplying the result by $2\hat{}d_2$, with ^ the exponent symbol.

By doing so, even if an attacker performs a fault attack on one of the subparts of the exponent d, the exponent d will still be big enough to make that none of the conditions P1, P2, P3 is verified, leading to a forged signature being rejected.

In a sixth exemplary embodiment, ensuring that $\text{UseHint}_q(\mathbf{h}, \mathbf{Az}\text{-}c\mathbf{t_1}.2^d, 2\gamma_2)$ is not equal to $\text{HighBits}_q(\mathbf{Az}, 2\gamma_2)$ when said fault attack occurs may comprise computing $\mathbf{Az}\text{-}c\mathbf{t_1}.2^d$ at the step of generating the vector of polynomials $\mathbf{w_1}$' by generating a second test vector $\mathbf{z}' = \mathbf{z}(2^d)^{-1}$ and by computing $(\mathbf{A}\,\mathbf{z}'\text{-}c\mathbf{t_1})\,2^d$.

By doing so, the exponent d is used two times in the computation of the vector of polynomials $\mathbf{w_1}$'. Therefore, if an attacker performs a fault attack on one of the calls to the exponent d, the vector of polynomials will have an incorrect value, leading to a rejection of the signature being verified.

As an example, n=256 and $q=2^{23}\text{-}2^{13}+1$.

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to a cryptographic device comprising a processor and a memory configured for performing the steps of the method according to the first aspect.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 is a schematic illustration of the key generation, signature generation and signature verification processes of the Dilithium cryptographic scheme;
- Figures 2 and 3 are schematic illustrations of the supporting algorithms for the Dilithium cryptographic scheme;
- Figure 4 is a schematic illustration of a cryptographic device according to an embodiment of the present invention;
- Figures 5 to 9 illustrate schematically examples of the signature generation according to an embodiment of the present invention.

## DETAILED DESCRIPTION OF EMBODIMENTS OF THE INVENTION

The invention relates to methods, and associated devices, for securing the execution of the signature verification of a Crystals-Dilithium post-quantum digital signature $\sigma$ of a message M.

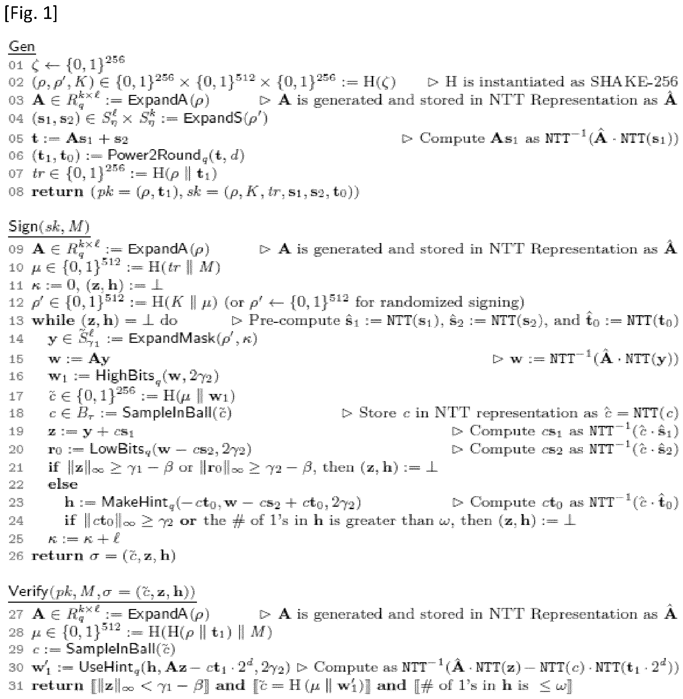

The methods, and associated devices, described here below are improvements of the existing implementation of Crystals-Dilithium signature scheme described in "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021. The details of the generation of the secret key, the generation of a signature and the verification of a signature according to this scheme are provided on **Figure 1.**

In the rest of this document, as in the reference cited above.

The secret key sk to be used for generating a legitimate signature is equal to $(\rho, K, tr, \mathbf{s_1}, \mathbf{s_2}, \mathbf{t_0})$ where :

- $\rho$, K are 256 bits binary values;
- $\mathbf{s_1}$ and $\mathbf{s_2}$ are secret vectors of length l, respectively k, of elements of the ring $R_q = Z_q[X]/(X^n + 1)$, with k, l, n and q integers, whose coefficients are lower than a first predetermined value $\eta$, the ensembles of such vectors are noted

$S_\eta^l$ and $S_\eta^k$ ;

- $\mathbf{t_0}$ is a polynomial vector of length k equal to the centered reduction modulo $2^d$ of a polynomial vector (t modulo q), noted $\mathbf{t_0} = (\mathbf{t} \bmod q)\,mod^{\pm}2^d$ with $\mathbf{t}= \mathbf{As_1} + \mathbf{s_2}$, $\mathbf{A}$ being a $k \times l$ matrix each of whose entries is a polynomial in the ring $R_q$. It is generated from the first element $\rho$ of the secret key sk by a matrix expansion using an extendable output function ExpandA defined in §5.3 of "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021, such as Keccak hash function. It may for example be SHAKE-128 or SHAKE-256. Alternatively, it may be AES-128 or AES-256;
- $tr$ is a hash of the key value $\rho$ and of $\mathbf{t_1}$ with $\mathbf{t_1}=((\mathbf{t}\text{-}\mathbf{t_0})/2^d)$ : $tr = H(\rho\|\mathbf{t_1})$ with || the concatenation operation;

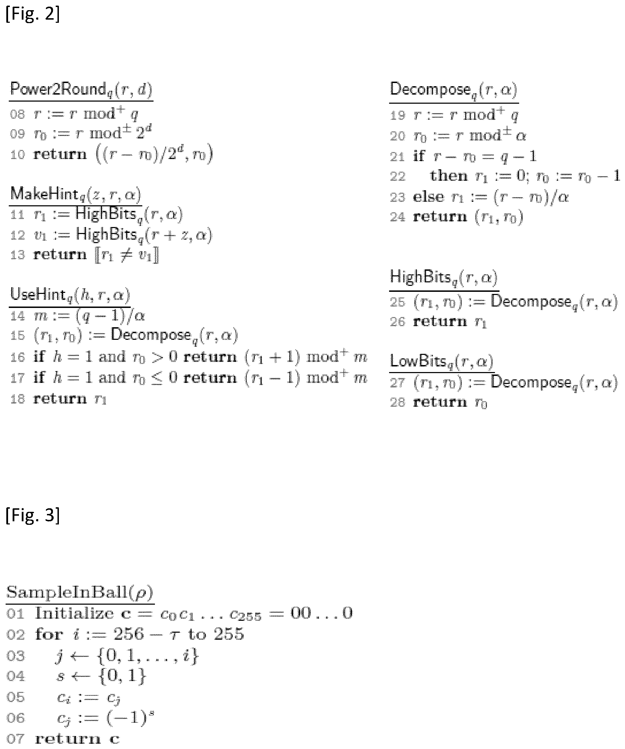

An equivalent definition of the vectors $\mathbf{t_1}$ and $\mathbf{t_0}$ is that $(\mathbf{t_1}, \mathbf{t_0})$ is the output of the $\text{Power2Round}_q$ function applied to (t,d) : $(\mathbf{t_1}, \mathbf{t_0})=\text{Power2Round}_q(\mathbf{t},d)$ with the definition of the $\text{Power2Round}_q$ function given in **Figure 2.**

The following elements are generated in the signature generation process, called Sign, of Crystals-Dilithium signature scheme :

- A vector of polynomials **w,** of length k, hereafter called "first vector of polynomials", is generated from the matrix **A** and from a random masking vector **y**, of length l, of elements of the ring $R_q$ whose coefficients are lower than a second predetermined value $\gamma_1$, with **w=Ay.**
- The first vector of polynomials **w** may be decomposed into a second vector of polynomials **w$_1$** and a third vector of polynomials **w$_0$** such that every polynomial coefficient **w**$^i$ in **Ay,** with i in {0, ..., k-1}, is written as **w**$^i$ = **w$_1$**$^i \cdot 2\gamma_2$ + **w$_0$**$^i$ where $|$**w$_0$**$^i| \leq \gamma_2$ with $\gamma_2$ a third predetermined value. More generally, any vector of polynomials v may be decomposed into two vectors $v_1$ and $v_0$ such that every polynomial coefficient **v**$^i$ is written as **v**$^i$ = **v$_1$**$^i \cdot 2\gamma_2$ + **v$_0$**$^i$ where $|$**v$_0$**$^i| \leq \gamma_2$. This defines the functions HighBits$_q$ and LowBits$_q$ which are such that **v$_1$**= HighBits$_q$(**v**, $2\gamma_2$) and **v$_0$**= LowBits$_q$(**v**, $2\gamma_2$). The output of HighBits$_q$(**v**, $2\gamma_2$) and of LowBits$_q$(**v**, $2\gamma_2$) may be referred to as the high bits, respectively the low bits, of v. A possible implementation of these functions is shown on Figure 2.
- A challenge c is generated from the message to be signed M and from the second vector of polynomials **w$_1$**; it is stored under a compressed format as $\tilde{c}$, hereafter called the "challenge seed". More precisely, the challenge seed $\tilde{c}$ may be defined as H($\mu\|$**w$_1$**) with $\mu$=H(tr$\|$M), with $\|$ the concatenation operation, and the challenge c is generated as the output of a function SampleInBall applied to $\tilde{c}$, defined on **Figure 3.** The function SampleInBall is also defined in §2.3 of "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021.

The "SampleInBall" routine is using the SHAKE-256 algorithm to generate a stream of random bytes from a value called seed. The first $\tau$ bits in the first 8 bytes of the random stream are interpreted as $\tau$ random sign bits in the polynomial c, and each sign bit can either be 0 or 1. The remaining 64 - $\tau$ bits are discarded. The rest of the random stream is used in a rejection sampling loop, where the next byte of the random stream from SHAKE-256 is interpreted as a number in the set {0, . . . , 255}. We use the corresponding sign in order to determine if it is a 1 or a -1 value.

- Another vector of polynomials **z** is generated as equal to **y** + c**s$_1$**.
- A last vector of polynomials **h,** hereafter called "hint vector of polynomials", or more simply "hint vector", is generated from the challenge c, the secret key sk and some of the other values listed above using the function MakeHint$_q$ defined on Figure 2 : **h** := MakeHint$_q$(-c**t$_0$**,**w** - c**s$_2$** + c**t$_0$**, 2 $\gamma_2$).

As examples, n may be chosen as equal to 256, d equal to 13 and q equal to $2^{23}$-$2^{13}$+1. Integers k and l defining the size of the matrix **A** may be chosen depending on the desired security level of the cryptographic process. The values of the second predetermined value $\gamma_1$ and the third predetermined value $\gamma_2$ may also depend on the chosen security level for Crystals-Dilithium scheme. For Dilithium2, $\gamma_1$ may for example be equal to $2^{17}$ and $\gamma_2$ to (q-1)/88=95 232. For Dilithium3 and Dilithium5, $\gamma_1$ may for example be equal to $2^{19}$ and $\gamma_2$ to (q-1)/32=261 888.

A signature $\sigma$ generated by the signature process of Crystals-Dilithium signature scheme is defined as ($\tilde{c}$, **z**, **h**).

The verification of such a signature may be performed by a cryptographic device. Such a device may for example be a personal computer or a server. It may also be a tamper-proof device such as a Hardware Security Module HSM. It may also be a smaller device such as a smartchip.

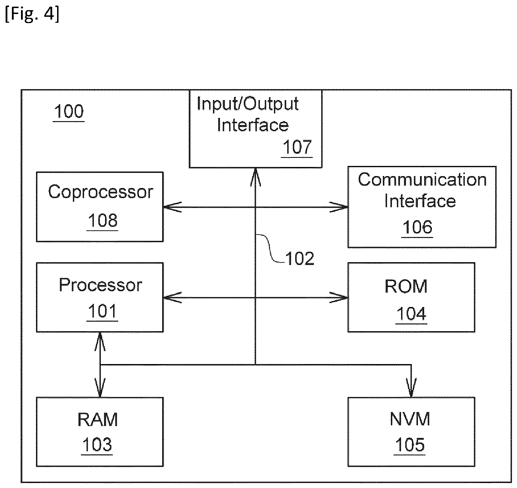

**Figure 4** is a schematic illustration of such a cryptographic device 100. It may include a processor 101 connected via a bus 102 to a random-access memory (RAM) 103, a read-only memory (ROM) 104, and/or a non-volatile memory (NVM) 105. It may further include a communication interface 106 connected to the bus and which may be used to connect the device to various forms of wireless networks, e.g., wide-area networks, WiFi networks, or mobile telephony networks, or to wired networks such as an Ethernet network. It may also include an input-output interface 107 providing interfaces to an administrator, such as one or more screens, loudspeakers, a mouse, tactile surfaces, a keyboard etc... The cryptographic device may further include a coprocessor 108. This coprocessor may perform some of the operations to be performed in the frame of the execution of the signature process. For example, it may be a hardware accelerator, such as a FPGA or an ASIC. This coprocessor may be a separate chip in the cryptographic device, or it may be included with the processor in a SoC. As an example, such a coprocessor may be used to compute polynomial multiplications or to perform matrix expansion.

The Crystals-Dilithium post-quantum digital signature verification is illustrated on Figure 1, where it is called "Verify", and in the §3 and on the Figure 4 of "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021.

This signature verification takes as inputs, the digital signature to be verified $\sigma$=($\tilde{c}$, **z**, **h**), the signed message M and the public key pk = ($\rho$, **t$_1$**) which corresponds to the secret key used for generating the signature.

First, the cryptographic device regenerates said matrix A from the first element $\rho$ of the public key pk by a matrix expansion using the extendable output function ExpandA.

Then, the cryptographic device regenerates the value $\mu$ from the public key values $\rho$ and $t_1$ and from said message M using a hash function H, noted $\mu = H(H(\rho \| t_1) \| M)$, with $\|$ the concatenation operation.

Then it regenerates from the challenge seed $\tilde{c}$ of the digital signature $\sigma$ the challenge c using the SampleInBall function illustrated on Figure 3.

Then the cryptographic device generates a vector of polynomials $w_1$' using a UseHint$_q$ function which uses said hint vector **h** of the digital signature to recover from the subtraction of the value **Az** by an intermediate value $ct_1.2^d$ the high-order bits of **Az**-ct: $w_1$' = UseHint$_q$(**h**, **Az**-ct$_1.2^d$, $2\gamma_2$), where $\gamma_2$ a determined parameter. The UseHint$_q$ function is defined in §2.4 of "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021. Its definition is recalled on Figure 2.

Finally, the cryptographic device tests whether the digital signature $\sigma = (\tilde{c}, \mathbf{z}, \mathbf{h})$ fulfills predetermined conditions.

A first predetermined condition comprises checking whether the infinite norm of the test vector z of the digital signature is lower than $\gamma_1 - \beta$, with $\gamma_1$ and $\beta$ determined parameters : $\|z\|_\infty < \gamma_1 - \beta$.

The infinity norm of a polynomial vector v is defined as the maximum among the infinity norms of the polynomials v' forming the polynomial vector : $\|v\|\infty = max_i(\|v\|\infty)$. And the infinite norm of a polynomial $v = \Sigma_i v_i X^i$ is defined as the maximum among the infinity norms of the coefficients of the polynomial $\|v\|\infty = max_i(\|v_i\|\infty)$. And, finally, the infinite norm of an element $v_i$ of $Z_q$ is defined as the absolute value of the centered reduction modulo q of this element $\| v_i \|\infty = |vi \, mod \pm q|$. Therefore, checking whether $\|z\|\infty < \gamma_1 - \beta$ is equivalent to checking that the absolute value of the centered reduction modulo q of each coefficient of each polynomial of the test vector z is lower than $\gamma_1 - \beta$ This check ensures that all the coefficients of the l polynomials of the vector *z* are below the security bound $\gamma_1 - \beta$.

A second predetermined condition comprises checking whether the challenge seed of the digital signature $\tilde{c}$ is equal to the hash of the generated value $\mu$ concatenated to the vector of polynomials $w_1$': $\tilde{c} = H(\mu \,\|\, w'_1)$. This test ensures that $w_1$' is equal to the high bits $w_1$ of the first vector of polynomials **w** computed during the signature generation, and that the challenge seed of the digital signature $\tilde{c}$ matches it for the signed message.

A third predetermined condition comprises checking whether the number of 1's in the hint vector of polynomials **h** of the digital signature is less than a predetermined integer $\omega$ : $|h|_{hj=1} \leq \omega$. This test ensures there are at most $\omega$ non-null coefficients among the k polynomials of the vector **h.**

Finally, the cryptographic device rejects the digital signature when at least one of said conditions is not fulfilled, or else it accepts said signature.

The verification algorithm of Dillithium scheme described above may be sensitive to fault attacks. More precisely, among the several tests performed during the signature verification and described here above, the test sensitive to fault attacks is the test whether the challenge seed of the digital signature $\tilde{c}$ is equal to the hash of the value $\mu$, which depends on the signed message M, concatenated to a vector of polynomials $w_1$' : $\tilde{c} = H(\mu \,\|\, w'_1)$ with $w'_1 =$ UseHint$_q$(**h**, **Az**-ct$_1.2^d$, $2\gamma_2$). This signature verification checks that the high bits of **Az**-ct, computed from the signature elements **z** and **h** and from the public key, correspond to the high bits $w_1$ of the corresponding **w=Ay** vector computed using the secret key during the signature generation Sign. If the elements $(\tilde{c}, \mathbf{z}, \mathbf{h})$ truly correspond to a valid signature $\sigma = (\tilde{c}, \mathbf{z}, \mathbf{h})$, **Az** - ct$_1. 2^d =$ **Ay** - $c\mathbf{s_2}$ + $c\mathbf{t_0}$ and UseHint$_q$(**h**, **Az**-ct$_1.2^d$, $2\gamma_2$) is indeed equal to HighBits$_q$ (**Ay**, $2\gamma_2$) =$w_1$ and the condition $\tilde{c} = H(\mu \,\|\, w'_1)$ is verified since $\tilde{c}$ is defined in the signature process as $H(\mu \| w_1)$.

An attacker could trick the signature verification algorithm into accepting as authentic a forged signature for a message M' if the attacker can perform a fault attack on the computation of $w'_1$ resulting in ct$_1 2^d$ being null or having a low enough infinite norm.

More precisely, let us define the three following conditions *P1, P2, P3*:

$$P1 : \mathbf{ct_1}.2^d = 0,$$

$$P2 : \|c\mathbf{t_1}2^d\|_\infty < \beta \text{ and } \|LowBits_q(\mathbf{Az} - c\mathbf{t_1}.2^d, 2\gamma_2\|_\infty < \gamma_2 - \beta,$$

$$P3 : \|c\mathbf{t_1}2^d\|_\infty < \gamma_2.$$

If the attacker, by his fault attack, makes any one of the three conditions *P1, P2, P3* satisfied, and sets correctly the value of the hint h, then $\text{UseHint}_q(\mathbf{h}, \mathbf{Az} - \mathbf{ct_1}.2^d, 2\gamma_2) = \text{HighBits}_q(\mathbf{Az}, 2\gamma_2)$. The required value of h to be selected by the attacker is chosen randomly for having the number of 1's less than a predetermined integer $\omega : |\mathbf{h}|_{hj=1} \leq \omega$ in the case of P1 or P2 and h = $MakeHint_q(\mathbf{ct_1}.2^d, \mathbf{Az} - \mathbf{ct_1}.2^d, 2\gamma_2)$ in the case of P3.

In such a case the high bits of $\mathbf{Az} - \mathbf{ct_1}.2^d$, after correction by the hint, do not depend anymore on the challenge c and the attacker can easily compute for his message M', for any value of **z,** a hint **h** and a challenge seed of the digital signature č verifying $\tilde{c} = H(\mu' \mid\mid w'_1)$ with μ' = H((H(ρ‖t₁)‖M') and $w'_1 = \text{UseHint}_q(\mathbf{h}, \mathbf{Az}\text{-}\mathbf{ct_1}.2^d, 2\gamma_2) = \text{HighBits}_q(\mathbf{Az}, 2\gamma_2)$.

Therefore, there is a need for improvements of Dillithium algorithm enabling to detect any fault attack making any of the conditions *P1, P2, P3* verified, or enabling to make the signature verification algorithm reject a signature even when any of the conditions *P1, P2, P3* is verified.

In order to detect such a fault attack or cancel its effect, the method according to the invention adds to the signature verification method a step ensuring that a fault attack aiming at verifying one of the conditions *P1, P2* and *P3* does not lead to accept a forged signature.

As a **first example,** the fact that a fault attack aiming at verifying one of conditions *P1, P2* and *P3* does not lead to accept a forged signature may be ensured by detecting the fault attack has occurred and rejecting the digital signature.

In a first exemplary embodiment, such a fault attack may be detected by checking the distribution of the intermediate value $\mathbf{ct_1}2^d$ before generating the vector of polynomials $\mathbf{w_1}'$. Indeed, in the absence of fault attack, the vector $-\mathbf{ct_1}2^d$ computed during the signature verification has both small and large values, uniformly distributed between 0 and q = 8380417. Therefore, verifying that $-\mathbf{ct_1}2^d$ values do follow their expected distribution, enables to detect faults changing the distribution of $-\mathbf{ct_1}2^d$ values for verifying conditions P1, P2 or P3. How well $-\mathbf{ct_1}2^d$ values follow a particular distribution may be assessed using statistical tests such as the Chi-square test goodness-of-fit test.

In a second exemplary embodiment, such a fault attack may be detected by verifying the correctness of the value d before generating the vector of polynomials $\mathbf{w_1}'$. Indeed, one way to make $-\mathbf{ct_1}2^d$ small is to fault the exponent *d,* by setting it for example to 0. This would be sufficient to make $-\mathbf{ct_1}2^d$ small enough to have condition P3 verified.

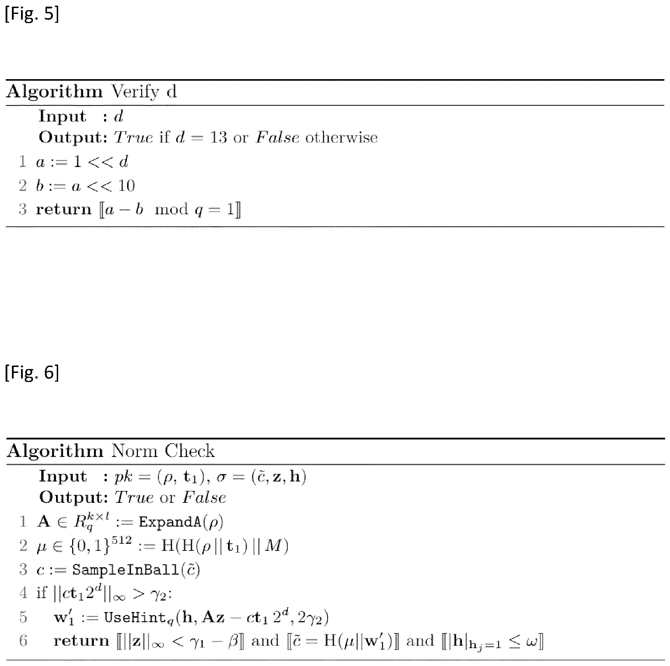

In "CRYSTALS-Dilithium Algorithm specifications and supporting documentation (Version 3.1)" by S. Bai, L. Ducas, E. Kiltz, T. Lepoint, V. Lyubashevsky, P. Schwabe, G. Seiler and D. Stehlé, February 2021, the exponent d is set to d=13. For this value of d, $(2^d)^{-1} = 1 - 2^{10} \bmod q$. Therefore the correctness of the value d may be verified by checking that $2^d \times (2^d)^{-1}$ equals to 1 mod q. **Figure 5** shows an exemplary implementation of such a test using only shift operations.

In a third exemplary embodiment, such a fault attack may be detected by checking whether the infinite norm of the intermediate value $\mathbf{ct_1}2^d$ is higher than the determined parameter $\gamma_2$ before generating the vector of polynomials $\mathbf{w_1}'$. The fault attack described above are indeed based on the fact that $\mathbf{ct_1}2^d$ is smaller than it should be. On the other hand, the probability for every of the K × N coefficients of $\mathbf{ct_1}2^d$ to be naturally less than $\gamma_2$ is negligible. Therefore, $\|\mathbf{ct_1}2^d\|\infty < \gamma_2$ can be considered as a signature of a fault attack. **Figure 6** provides an exemplary implementation of a signature verification algorithm performing such a check.

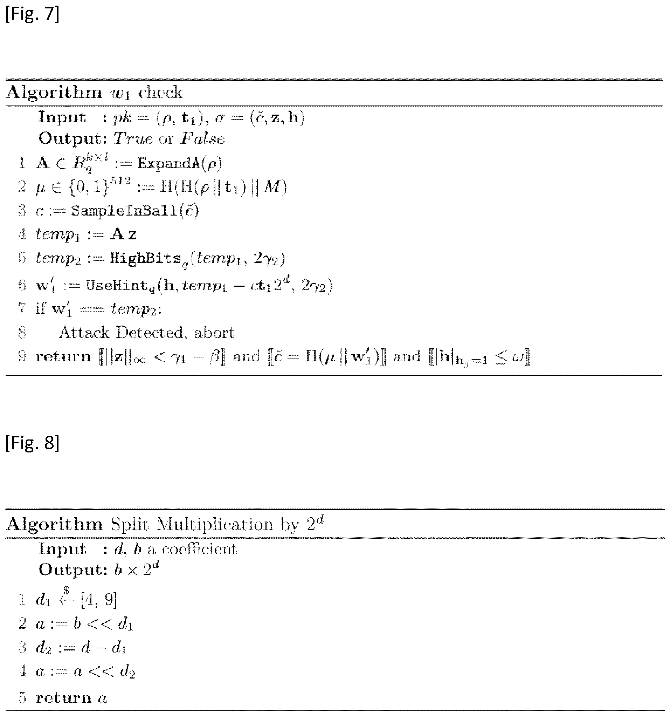

In a fourth exemplary embodiment, such a fault attack may be detected by comparing the high bits of the vector **Az** and $\text{UseHint}_q(\mathbf{h}, \mathbf{Az}\text{-}\mathbf{ct_1}.2^d, 2\gamma_2)$ Indeed, the goal of the fault attack described above is to ensure that $\text{UseHint}_q(\mathbf{h}, \mathbf{Az}\text{-}\mathbf{ct_1}.2^d, 2\gamma_2) = \text{HighBits}_q(\mathbf{Az}, 2\gamma_2)$. As described above, the probability for this equality to be naturally verified is negligible. Therefore, it can be considered as a signature of the fault attack described above. **Figure 7** provides an exemplary implementation of a signature verification algorithm performing such a check. In this exemplary implementation the generation of the vector of polynomials $\mathbf{w_1}'$ using the $\text{UseHint}_q$ function comprises:

- generating a first temporary value temp1 equal to the vector **Az,**
- generating a second temporary value temp2 using the $\text{HighBits}_q$ function which recovers high-order bits of said first temporary value: temp2 = $\text{HighBits}_q$(temp1, $2\gamma_2$),
- generating the vector of polynomials $\mathbf{w_1}'$ using the $\text{UseHint}_q$ function which uses the hint vector of the digital signature h to recover, from the result of a subtraction of the first temporary value by the intermediate value $\mathbf{ct_1}2^d$, the high-order bits of **Az**-ct: $\mathbf{w_1}' = \text{UseHint}_q(\mathbf{h}, \text{temp1-}\mathbf{ct_1}2^d, 2\gamma_2)$,
- comparing the high bits of the vector **Az** and $\text{UseHint}_q(\mathbf{h}, \mathbf{Az}\text{-}\mathbf{ct_1}.2^d, 2\gamma_2)$ by checking whether said generated vector of polynomials $\mathbf{w_1}'$ equals to said generated second temporary value temp2.

As **a second example,** the fact that a fault attack aiming at verifying one of conditions *P1, P2* and *P3* does not lead to accept a forged signature may be ensured by performing part of the generation of the vector of polynomials $\mathbf{w_1}'$ in a way that ensures that $\text{UseHint}_q(\mathbf{h}, \mathbf{Az}\text{-}\mathbf{ct_1}.2^d, 2\gamma_2)$ is not equal to $\text{HighBits}_q(\mathbf{Az}, 2\gamma_2)$ even when a fault attack occurs.

In a fifth exemplary embodiment, it can be ensured that $\text{UseHint}_q(\mathbf{h}, \mathbf{Az}\text{-}\mathbf{ct_1}.2^d, 2\gamma_2)$ is not equal to $\text{HighBits}_q(\mathbf{Az}, 2\gamma_2)$ by setting $d_1 > 3$ and $d_2 > 3$ such that $d = d_1 + d_2$ and computing the intermediate value $\mathbf{ct_1}.2^d$ at the step of generating the vector of polynomials $\mathbf{w_1}'$ by computing $\mathbf{ct_1}2^{d_1}$ first and then multiplying the result by $2^{d_2}$, with ^ the

exponent symbol. By doing so, even if an attacker performs a fault attack on either $d_1$ or $d_2$, the resulting $ct_1$. $2^d$ value will still be too big to verify propositions P1, P2 or P3. **Figure 8** provides an exemplary implementation of such a two-steps multiplication of a value b by $2^d$.

In a sixth exemplary embodiment, it can be ensured that $\text{UseHint}_q(\mathbf{h}, \mathbf{Az}\text{-}ct_1.2^d, 2\gamma_2)$ is not equal to $\text{HighBits}_q$ $(\mathbf{Az},2\gamma_2)$ by changing the computation of $\mathbf{Az}$ - $ct_1$. $2^d$ in a way that uses twice the exponent d. One can for example write $\mathbf{A}\,z\text{-}$ $c\,t_1\,2^d$ as $(\mathbf{A}\,z\,(2^d)^{-1}\,\text{-}c\,t_1)\,2^d$ . Therefore, at the step of generating the vector of polynomials $\mathbf{w_1}$', $\mathbf{Az}$ - $ct_1$. $2^d$ may be computed by generating a second test vector $\mathbf{z'} = \mathbf{z}\,(2^d)^{-1}$ and by computing $(\mathbf{Az'}\text{-}ct_1).2^d$. By doing so, a forged signature will always be invalid and rejected if an attacker performs a fault attack skipping either the multiplication b- $(2^d)^{-1}$ or by $2^d$ in the computation of $\mathbf{w_1}$'.

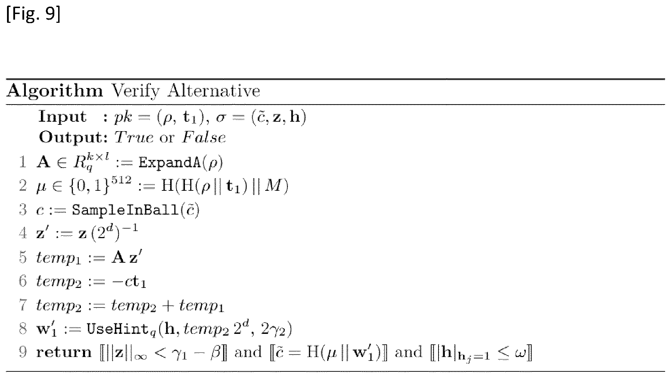

**Figure 9** provides an exemplary implementation of a signature verification algorithm using such a way of computing $\mathbf{w_1}$'. In this exemplary implementation the generation of the vector of polynomials $\mathbf{w_1}$' using the $\text{UseHint}_q$ function comprises:

- generating a second test vector $\mathbf{z'} = \mathbf{z}\,(2^d)^{-1}$,
- generating a first temporary value temp1 = $\mathbf{Az'}$,
- generating a second temporary value temp2 = $-ct_1$,
- setting said second temporary value temp2 to temp2+temp1,
- generating said vector of polynomials $\mathbf{w_1}$' using the $\text{UseHint}_q$ function which uses the hint vector of the digital signature $\mathbf{h}$ to recover, from the product of said set second temporary value temp2 and of the value $2^d$, high-order bits of $\mathbf{Az}$ - ct :
- $\mathbf{w_1}$' = $\text{UseHint}_q(\mathbf{h}, \text{temp2}. 2^d, 2\gamma_2)$ with ^ the exponent symbol.

According to a second aspect, the invention relates to a computer program product directly loadable into the memory of at least one computer, comprising software code instructions for performing, when said product is run on the computer, the steps of the methods described here before.

According to a third aspect, the invention is also related to a cryptographic device 100 comprising a processor and a memory described here before and configured for performing the steps of the methods described above.

In addition to these features, the computer program and the cryptographic device according to the second and third aspects of the invention may be configured for performing or may comprise any other features described here before.

As a result, the improved Crystals-Dilithium signature verification process described above prevents an attacker from having a forged signature accepted thanks to a successful fault attack on the computation of the vector $\mathbf{w_1}$' making any one of the conditions P1, P2 or P3 verified. This result is achieved by either detecting such a fault attack or making the computation of $\mathbf{w_1}$' insensitive to such a fault attack.

**Claims**

1. A method for securing against fault attacks the execution of the verification of a Crystals-Dilithium post-quantum digital signature $\sigma$ of a message M comprising a challenge seed $\tilde{c}$, a test vector $\mathbf{z}$ and a hint vector of polynomials $\mathbf{h}$, $\sigma = (\tilde{c}, \mathbf{z}, \mathbf{h})$, generated with a secret key sk = $(\rho, K, tr, \mathbf{s_1}, \mathbf{s_2}, \mathbf{t_0})$ where :

   - the key values $\rho$, K are 256 bits binary values,
   - $\mathbf{s_1}$ and $\mathbf{s_2}$ are secret vectors of length l, respectively k, of elements in $Z_q[X]/(X^n+1)$ whose coefficients are lower than a first predetermined value $\eta$, with k, l, q and n integers,
   - $\mathbf{t_0}$ is a polynomial vector of length k equal to the centered reduction modulo $2^d$ of a polynomial vector t modulo q with d an integer and $\mathbf{t} = \mathbf{As_1} + \mathbf{s_2}$, $\mathbf{A}$ being a matrix of size k*l whose elements are all polynomials in $Z_q[X]/(X^n+1)$ generated from said key value $\rho$ using an extendable output function ExpandA,
   - and $tr$ is a hash of the key value $\rho$ and of $\mathbf{t_1}$ with $\mathbf{t_1}=((\mathbf{t}\text{-}\mathbf{t_0})/2^d)$
   said Crystals-Dilithium post-quantum digital signature verification taking as inputs, said digital signature $\sigma$, said message M and a public key pk = $(\rho, \mathbf{t_1})$, and comprising :

      - a)generating said matrix $\mathbf{A}$,
      - b)generating a value $\mu$ from the public key values $\rho$ and $\mathbf{t_1}$ and from said message M using a hash function,
      - c)generating from the challenge seed $\tilde{c}$ of the digital signature $\sigma$ a challenge c using the SampleInBall function,
      - d)generating a vector of polynomials $\mathbf{w_1}$' using the $\text{UseHint}_q$ function which uses said hint vector $\mathbf{h}$ of the digital signature to recover, from the subtraction of the value $\mathbf{Az}$ by an intermediate value $ct_1.2^d$, high-order bits of $\mathbf{Az}$-ct: $\mathbf{w_1}$' = $\text{UseHint}_q(\mathbf{h}, \mathbf{Az}\text{-}ct_1. 2^d, 2\gamma_2)$, where $\gamma_2$ a determined parameter,
      - e) testing whether the digital signature, $\tilde{c}$, $\mathbf{z}$, $\mathbf{h}$ fulfills predetermined conditions comprising :

- checking whether the absolute value of the centered reduction modulo q of each coefficient of each polynomial of the test vector **z** of the digital signature is lower than $\gamma_1$ - $\beta$, with $\gamma_1$ and $\beta$ determined parameters,
- checking whether the challenge seed of the digital signature $\tilde{c}$ is equal to the hash of the generated value $\mu$ concatenated to the vector of polynomials **w$_1$'**,
- checking whether the number of 1's in the vector of polynomials **h** of the digital signature is less than a predetermined integer $\omega$,

and when at least one of said conditions is not fulfilled, rejecting the digital signature, else accepting said signature,

said method being performed by a cryptographic device (100) comprising a processor (101) and a memory (103), wherein said verification of the signature comprises further : a step of ensuring that a fault attack aiming at verifying one of the conditions $P1, P2$ and $P3$ does not lead to accept a forged signature, where :

$$P1 : \mathbf{ct_1}.2^d = 0,$$

$$P2 : \left\|ct_1.2^d\right\|_\infty < \beta \text{ and } \left\|LowBits_q(\mathbf{Az} - ct_1.2^d, 2\gamma_2\right\|_\infty < \gamma_2 - \beta,$$

$$P3 : \left\|ct_1.2^d\right\|_\infty < \gamma_2.$$

2. The method of claim 1, wherein ensuring that a fault attack aiming at verifying one of conditions $P1, P2$ and $P3$ does not lead to accept a forged signature comprises detecting said fault attack has occurred and rejecting said digital signature.

3. The method of claim 2, wherein detecting said fault attack has occurred comprises checking the distribution of the intermediate value $ct_1 2^d$ before generating the vector of polynomials **w$_1$'**.

4. The method of claim 2 or 3, wherein detecting said fault attack has occurred comprises verifying the correctness of the value d before generating the vector of polynomials **w$_1$'**.

5. The method of claim 4, wherein verifying the correctness of the value d comprises checking that $2^d \times (2^d)^{-1}$ equals to 1 mod q.

6. The method of any one of claims 2 to 5, wherein detecting said fault attack has occurred comprises checking whether the infinite norm of the intermediate value $ct_1 2^d$ is higher than the determined parameter $\gamma_2$ before generating the vector of polynomials **w$_1$'**.

7. The method of any one of claims 2 to 6, wherein detecting said fault attack has occurred comprises comparing the high bits of the vector **Az** and $UseHint_q(\mathbf{h}, \mathbf{Az}\text{-}ct_1.2^d, 2\gamma_2)$.

8. The method of claim 7, wherein :

• generating a vector of polynomials **w$_1$'** using the $UseHint_q$ function comprises :

- generating a first temporary value temp1 equal to the vector **Az,**
- generating a second temporary value temp2 using the $HighBits_q$ function which recovers high-order bits of said first temporary value: temp2 = $HighBits_q$(temp1, $2\gamma_2$),
- generating said vector of polynomials **w$_1$'** using the $UseHint_q$ function which uses the hint vector of the digital signature h to recover, from a result of a subtraction of the first temporary value by the intermediate value $ct_1.2^d$, high-order bits of **Az**-ct: **w$_1$'** = $UseHint_q(\mathbf{h}, \text{temp1} - ct_1. 2^d, 2\gamma_2)$,
- comparing the high bits of the vector **Az** and $UseHint_q(\mathbf{h}, \mathbf{Az}\text{-}ct_1. 2^d, 2\gamma_2)$ comprises checking whether said generated vector of polynomials **w$_1$'** is equal to said generated second temporary value temp2.

9. The method of claim 1, wherein ensuring that a fault attack aiming at verifying one of conditions *P1, P2* and *P3* does not lead to accept a forged signature comprises a step of ensuring that $\text{UseHint}_q(\mathbf{h}, \mathbf{Az}\text{-}c\mathbf{t_1}.2^d, 2\gamma_2)$ is not equal to $\text{HighBits}_q(\mathbf{Az},2\gamma_2)$ when said fault attack occurs.

10. The method of claim 9, wherein ensuring that $\text{UseHint}_q(\mathbf{h}, \mathbf{Az}\text{-}c\mathbf{t_1}2^d, 2\gamma_2)$ is not equal to $\text{HighBits}_q(\mathbf{Az},2\gamma_2)$ when said fault attack occurs comprises setting $d_1 > 3$ and $d_2 > 3$ such that $d = d_1 + d_2$ and computing the intermediate value $c\mathbf{t_1}.2^d$ at the step of generating the vector of polynomials $\mathbf{w_1}'$ by computing $c\mathbf{t_1}. 2\text{\textasciicircum}d_1$ and then multiplying the result by $2\text{\textasciicircum}d_2$, with \textasciicircum the exponent symbol.

11. The method of claim 9, wherein ensuring that $\text{UseHint}_q(\mathbf{h}, Az\text{-}c\mathbf{t_1}.2^d, 2\gamma_2)$ is not equal to $\text{HighBits}_q(\mathbf{Az},2\gamma_2)$ when said fault attack occurs comprises computing $\mathbf{Az} - c\mathbf{t_1}. 2^d$ at the step of generating the vector of polynomials $\mathbf{w_1}'$ by generating a second test vector $\mathbf{z}' = \mathbf{z}(2^d)^{-1}$ and by computing $(\mathbf{A} \mathbf{z}' \text{-}c\mathbf{t_1}) 2^d$.

12. The method of any one of claims 1 to 11, wherein $n=256$ and $q=2^{23}\text{-}2^{13}+1$.

13. A computer program product directly loadable into the memory of at least one computer, comprising software code instructions for performing the steps of any one of claims 1 to 12 when said product is run on the computer.

14. A cryptographic device (100) comprising a processor (101) and a memory (103) configured for performing the steps of any one of claims 1 to 12.

[Fig. 1]

<u>Gen</u>

$\zeta \leftarrow \{0,1\}^{256}$

$(\rho, \rho', K) \in \{0,1\}^{256} \times \{0,1\}^{512} \times \{0,1\}^{256} := H(\zeta)$     $\triangleright$ H is instantiated as SHAKE-256

$\mathbf{A} \in R_q^{k \times \ell} := \mathsf{ExpandA}(\rho)$     $\triangleright$ $\mathbf{A}$ is generated and stored in NTT Representation as $\hat{\mathbf{A}}$

$(\mathbf{s}_1, \mathbf{s}_2) \in S_\eta^\ell \times S_\eta^k := \mathsf{ExpandS}(\rho')$

$\mathbf{t} := \mathbf{A}\mathbf{s}_1 + \mathbf{s}_2$     $\triangleright$ Compute $\mathbf{A}\mathbf{s}_1$ as $\mathrm{NTT}^{-1}(\hat{\mathbf{A}} \cdot \mathrm{NTT}(\mathbf{s}_1))$

$(\mathbf{t}_1, \mathbf{t}_0) := \mathsf{Power2Round}_q(\mathbf{t}, d)$

$tr \in \{0,1\}^{256} := H(\rho \parallel \mathbf{t}_1)$

**return** $(pk = (\rho, \mathbf{t}_1), sk = (\rho, K, tr, \mathbf{s}_1, \mathbf{s}_2, \mathbf{t}_0))$

<u>Sign($sk, M$)</u>

$\mathbf{A} \in R_q^{k \times \ell} := \mathsf{ExpandA}(\rho)$     $\triangleright$ $\mathbf{A}$ is generated and stored in NTT Representation as $\hat{\mathbf{A}}$

$\mu \in \{0,1\}^{512} := H(tr \parallel M)$

$\kappa := 0, (\mathbf{z}, \mathbf{h}) := \perp$

$\rho' \in \{0,1\}^{512} := H(K \parallel \mu)$ (or $\rho' \leftarrow \{0,1\}^{512}$ for randomized signing)

**while** $(\mathbf{z}, \mathbf{h}) = \perp$ **do**     $\triangleright$ Pre-compute $\hat{\mathbf{s}}_1 := \mathrm{NTT}(\mathbf{s}_1)$, $\hat{\mathbf{s}}_2 := \mathrm{NTT}(\mathbf{s}_2)$, and $\hat{\mathbf{t}}_0 := \mathrm{NTT}(\mathbf{t}_0)$

    $\mathbf{y} \in \tilde{S}_{\gamma_1}^\ell := \mathsf{ExpandMask}(\rho', \kappa)$

    $\mathbf{w} := \mathbf{A}\mathbf{y}$     $\triangleright$ $\mathbf{w} := \mathrm{NTT}^{-1}(\hat{\mathbf{A}} \cdot \mathrm{NTT}(\mathbf{y}))$

    $\mathbf{w}_1 := \mathsf{HighBits}_q(\mathbf{w}, 2\gamma_2)$

    $\tilde{c} \in \{0,1\}^{256} := H(\mu \parallel \mathbf{w}_1)$

    $c \in B_\tau := \mathsf{SampleInBall}(\tilde{c})$     $\triangleright$ Store $c$ in NTT representation as $\hat{c} = \mathrm{NTT}(c)$

    $\mathbf{z} := \mathbf{y} + c\mathbf{s}_1$     $\triangleright$ Compute $c\mathbf{s}_1$ as $\mathrm{NTT}^{-1}(\hat{c} \cdot \hat{\mathbf{s}}_1)$

    $\mathbf{r}_0 := \mathsf{LowBits}_q(\mathbf{w} - c\mathbf{s}_2, 2\gamma_2)$     $\triangleright$ Compute $c\mathbf{s}_2$ as $\mathrm{NTT}^{-1}(\hat{c} \cdot \hat{\mathbf{s}}_2)$

    **if** $\|\mathbf{z}\|_\infty \geq \gamma_1 - \beta$ **or** $\|\mathbf{r0}\|_\infty \geq \gamma_2 - \beta$, **then** $(\mathbf{z}, \mathbf{h}) := \perp$

    **else**

      $\mathbf{h} := \mathsf{MakeHint}_q(-c\mathbf{t}_0, \mathbf{w} - c\mathbf{s}_2 + c\mathbf{t}_0, 2\gamma_2)$     $\triangleright$ Compute $c\mathbf{t}_0$ as $\mathrm{NTT}^{-1}(\hat{c} \cdot \hat{\mathbf{t}}_0)$

      **if** $\|c\mathbf{t}_0\|_\infty \geq \gamma_2$ **or** the # of 1's in $\mathbf{h}$ is greater than $\omega$, **then** $(\mathbf{z}, \mathbf{h}) := \perp$

    $\kappa := \kappa + \ell$

**return** $\sigma = (\tilde{c}, \mathbf{z}, \mathbf{h})$

<u>Verify($pk, M, \sigma = (\tilde{c}, \mathbf{z}, \mathbf{h})$)</u>

$\mathbf{A} \in R_q^{k \times \ell} := \mathsf{ExpandA}(\rho)$     $\triangleright$ $\mathbf{A}$ is generated and stored in NTT Representation as $\hat{\mathbf{A}}$

$\mu \in \{0,1\}^{512} := H(H(\rho \parallel \mathbf{t}_1) \parallel M)$

$c := \mathsf{SampleInBall}(\tilde{c})$

$\mathbf{w}_1' := \mathsf{UseHint}_q(\mathbf{h}, \mathbf{A}\mathbf{z} - c\mathbf{t}_1 \cdot 2^d, 2\gamma_2)$ $\triangleright$ Compute as $\mathrm{NTT}^{-1}(\hat{\mathbf{A}} \cdot \mathrm{NTT}(\mathbf{z}) - \mathrm{NTT}(c) \cdot \mathrm{NTT}(\mathbf{t}_1 \cdot 2^d))$

**return** $[\![\|\mathbf{z}\|_\infty < \gamma_1 - \beta]\!]$ **and** $[\![\tilde{c} = H(\mu \parallel \mathbf{w}_1')]\!]$ **and** $[\![\text{# of 1's in } \mathbf{h} \text{ is } \leq \omega]\!]$

[Fig. 2]

Power2Round$_q(r, d)$

08 $r := r \bmod^+ q$
09 $r_0 := r \bmod^{\pm} 2^d$
10 **return** $\left((r - r_0)/2^d, r_0\right)$

MakeHint$_q(z, r, \alpha)$

11 $r_1 := \mathsf{HighBits}_q(r, \alpha)$
12 $v_1 := \mathsf{HighBits}_q(r + z, \alpha)$
13 **return** $[\![r_1 \neq v_1]\!]$

UseHint$_q(h, r, \alpha)$

14 $m := (q - 1)/\alpha$
15 $(r_1, r_0) := \mathsf{Decompose}_q(r, \alpha)$
16 **if** $h = 1$ **and** $r_0 > 0$ **return** $(r_1 + 1) \bmod^+ m$
17 **if** $h = 1$ **and** $r_0 \leq 0$ **return** $(r_1 - 1) \bmod^+ m$
18 **return** $r_1$

Decompose$_q(r, \alpha)$

19 $r := r \bmod^+ q$
20 $r_0 := r \bmod^{\pm} \alpha$
21 **if** $r - r_0 = q - 1$
22    **then** $r_1 := 0$; $r_0 := r_0 - 1$
23 **else** $r_1 := (r - r_0)/\alpha$
24 **return** $(r_1, r_0)$

HighBits$_q(r, \alpha)$

25 $(r_1, r_0) := \mathsf{Decompose}_q(r, \alpha)$
26 **return** $r_1$

LowBits$_q(r, \alpha)$

27 $(r_1, r_0) := \mathsf{Decompose}_q(r, \alpha)$
28 **return** $r_0$

[Fig. 3]

$\mathrm{SampleInBall}(\rho)$

01 Initialize $\mathbf{c} = c_0 c_1 \ldots c_{255} = 00 \ldots 0$
02 **for** $i := 256 - \tau$ **to** 255
03    $j \leftarrow \{0, 1, \ldots, i\}$
04    $s \leftarrow \{0, 1\}$
05    $c_i := c_j$
06    $c_j := (-1)^s$
07 **return** $\mathbf{c}$

[Fig. 4]

[Fig. 5]

**Algorithm** Verify d

> **Input** : $d$
> **Output:** *True* if $d = 13$ or *False* otherwise
>
> $a := 1 << d$
> $b := a << 10$
> **return** $[\![a - b \mod q = 1]\!]$

[Fig. 6]

**Algorithm** Norm Check

> **Input** : $pk = (\rho, \mathbf{t}_1)$, $\sigma = (\tilde{c}, \mathbf{z}, \mathbf{h})$
> **Output:** *True* or *False*
>
> $\mathbf{A} \in R_q^{k \times l} := \mathtt{ExpandA}(\rho)$
> $\mu \in \{0, 1\}^{512} := \mathrm{H}(\mathrm{H}(\rho \,\|\, \mathbf{t}_1) \,\|\, M)$
> $c := \mathtt{SampleInBall}(\tilde{c})$
> **if** $\|c\mathbf{t}_1 2^d\|_\infty > \gamma_2$:
>     $\mathbf{w}_1' := \mathtt{UseHint}_q(\mathbf{h}, \mathbf{Az} - c\mathbf{t}_1 2^d, 2\gamma_2)$
>     **return** $[\![\|\mathbf{z}\|_\infty < \gamma_1 - \beta]\!]$ and $[\![\tilde{c} = \mathrm{H}(\mu \| \mathbf{w}_1')]\!]$ and $[\![\|\mathbf{h}|_{\mathbf{h}_j = 1} \leq \omega]\!]$

[Fig. 7]

---

**Algorithm** $w_1$ check

Input : $pk = (\rho, \mathbf{t}_1)$, $\sigma = (\tilde{c}, \mathbf{z}, \mathbf{h})$
Output: *True* or *False*

1 $\mathbf{A} \in R_q^{k \times l} := \mathtt{ExpandA}(\rho)$
2 $\mu \in \{0,1\}^{512} := \mathrm{H}(\mathrm{H}(\rho \,\|\, \mathbf{t}_1) \,\|\, M)$
3 $c := \mathtt{SampleInBall}(\tilde{c})$
4 $temp_1 := \mathbf{A}\,\mathbf{z}$
5 $temp_2 := \mathtt{HighBits}_q(temp_1, 2\gamma_2)$
6 $\mathbf{w}_1' := \mathtt{UseHint}_q(\mathbf{h}, temp_1 - c\mathbf{t}_1 2^d, 2\gamma_2)$
7 if $\mathbf{w}_1' == temp_2$:
8     Attack Detected, abort
9 **return** $[\![ \|\mathbf{z}\|_\infty < \gamma_1 - \beta ]\!]$ and $[\![ \tilde{c} = \mathrm{H}(\mu \,\|\, \mathbf{w}_1') ]\!]$ and $[\![ \|\mathbf{h}|_{\mathbf{h}_j = 1} \leq \omega ]\!]$

---

[Fig. 8]

---

**Algorithm** Split Multiplication by $2^d$

Input : $d$, $b$ a coefficient
Output: $b \times 2^d$

1 $d_1 \overset{\$}{\leftarrow} [4, 9]$
2 $a := b << d_1$
3 $d_2 := d - d_1$
4 $a := a << d_2$
5 **return** $a$

---

[Fig. 9]

**Algorithm** Verify Alternative

---

    **Input**   : $pk = (\rho, \mathbf{t}_1)$, $\sigma = (\tilde{c}, \mathbf{z}, \mathbf{h})$

    **Output:** *True* or *False*

1  $\mathbf{A} \in R_q^{k \times l} := \texttt{ExpandA}(\rho)$

2  $\mu \in \{0, 1\}^{512} := \mathrm{H}(\mathrm{H}(\rho \,\|\, \mathbf{t}_1) \,\|\, M)$

3  $c := \texttt{SampleInBall}(\tilde{c})$

4  $\mathbf{z}' := \mathbf{z}\,(2^d)^{-1}$

5  $temp_1 := \mathbf{A}\,\mathbf{z}'$

6  $temp_2 := -c\mathbf{t}_1$

7  $temp_2 := temp_2 + temp_1$

8  $\mathbf{w}_1' := \texttt{UseHint}_q(\mathbf{h}, temp_2\, 2^d, 2\gamma_2)$

9  **return** $[\![\|\mathbf{z}\|_\infty < \gamma_1 - \beta]\!]$ and $[\![\tilde{c} = \mathrm{H}(\mu \,\|\, \mathbf{w}_1')]\!]$ and $[\![|\mathbf{h}|_{\mathbf{h}_j = 1} \leq \omega]\!]$

---

Europäisches
Patentamt

European
Patent Office

Office européen
des brevets

# EUROPEAN SEARCH REPORT

Application Number

EP 23 30 6943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ALEXANDRE BERZATI ET AL: "Exploiting Intermediate Value Leakage in Dilithium: A Template-Based Approach", IACR, INTERNATIONAL ASSOCIATION FOR CRYPTOLOGIC RESEARCH , vol. 20230717:090345 17 July 2023 (2023-07-17), pages 1-23, XP061079091, Retrieved from the Internet: URL:https://eprint.iacr.org/archive/2023/050/1689584625.pdf [retrieved on 2023-07-17] * sections 2-5, algorithms 1-3 * | 1-14 | INV. H04L9/00 H04L9/30 H04L9/32 |
| Y | LEO DUCAS ET AL: "CRYSTALS -- Dilithium: A Lattice-BAsed Digital Signature Scheme", IACR, INTERNATIONAL ASSOCIATION FOR CRYPTOLOGIC RESEARCH , vol. 20180910:112250 10 September 2018 (2018-09-10), pages 1-31, XP061026325, Retrieved from the Internet: URL:http://eprint.iacr.org/2017/633.pdf [retrieved on 2018-09-10] * sections 1-4, figures 1-4 * | 1-14 | |
| A | GUPTA NAINA ET AL: "CRYSTALS-Dilithium on RISC-V Processor: Lightweight Secure Boot Using Post-Quantum Digital Signature", 2023 IEEE/ACM INTERNATIONAL CONFERENCE ON COMPUTER AIDED DESIGN (ICCAD), IEEE, 28 October 2023 (2023-10-28), pages 1-7, XP034479765, DOI: 10.1109/ICCAD57390.2023.10323688 [retrieved on 2023-11-30] * the whole document * | 1-14 | TECHNICAL FIELDS SEARCHED (IPC) H04L |

The present search report has been drawn up for all claims

| Place of search | Date of completion of the search | Examiner |
|---|---|---|
| Munich | 11 April 2024 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. BAI** ; **L. DUCAS** ; **E. KILTZ** ; **T. LEPOINT** ; **V. LYUBASHEVSKY** ; **P. SCHWABE** ; **G. SEILER** ; **D. STEHLÉ**. *CRYSTALS-Dilithium Algorithm specifications and supporting documentation (Version 3.1)*, February 2021